# EUROPEAN PATENT APPLICATION

(11) **EP 4 733 558 A1**
(43) Date of publication of application: **29.04.2026**
(21) Application number: 25204510.9
(22) Date of filing: 25.09.2025
(51) Int. Cl.: F02C 3/22, F02C 7/232, F02C 9/40

(54) **HYDROGEN FUELLED AIRCRAFT GAS TURBINE ENGINE FUEL SYSTEM**

(30) Priority: 16.10.2024 GB 202415219
(71) Applicant: Rolls-Royce plc, London N1 9FX (GB)
(72) Inventor: Auterson, Duncan, Derby, DE24 8BJ (GB); Beedie, David W, Derby, DE24 8BJ (GB); Palmer, Chloe J, Derby, DE24 8BJ (GB); Young, Richard A, Derby, DE24 8BJ (GB)
(74) Representative: Rolls-Royce plc

(57) **Abstract**

A fuel system for an aircraft gas turbine engine (103) comprises:
a main fuel conduit (206) configured to deliver hydrogen fuel to a combustor (203) of the gas turbine engine (103);
a fuel metering valve (213) configured to modulate a mass flow of fuel delivered to the gas turbine engine combustor (206); and
a bypass valve (209, 210) provided upstream in main fuel conduit hydrogen fuel flow of the fuel metering valve (213) and configured to vent a portion of hydrogen fuel upstream of the fuel metering valve (213).

The fuel system further comprises a controller (218) configured to control the fuel metering valve (213) and the vent valve (209, 210). The controller (218) is configured to, during an engine start procedure, open the fuel metering valve (213) and open the vent valve (209, 210) to flow a first fuel portion to the combustor (206) via the fuel metering valve (213) and to vent a second fuel portion via the vent valve.

## Description

### FIELD

This disclosure relates to fuel systems for hydrogen fuelled aircraft gas turbine engines, aircraft propulsion systems including such fuel systems, and methods of operation of such fuel systems.

### BACKGROUND

In order to limit emissions of carbon dioxide, use of hydrogen as an alternative to hydrocarbon fuel in gas turbine engines has historically only been practical in land-based installations. However, more recently there has been interest in aircraft powered by hydrogen stored at cryogenic temperatures, as either a compressed gas, a supercritical fluid, or a liquid.

Challenges of operating such gas turbine engines include managing fuel flow through such systems. Controlling fuel flow of liquid hydrogen is challenging in view of the low temperatures. Controlling gaseous hydrogen fuel flow is also challenging in view of the properties of hydrogen gas. Additionally, the variation in fuel flow between maximum fuel flow pressure and mass flow rate and minimum pressure and fuel rate is very high, leading to additional control problems.

### SUMMARY

In accordance with a first aspect there is provided a fuel system for an aircraft gas turbine engine, the fuel system comprising:
a main fuel conduit configured to deliver hydrogen fuel to a combustor of the gas turbine engine;
a fuel metering valve configured to modulate a mass flow of fuel delivered to the gas turbine engine combustor;
a bypass valve provided upstream in main fuel conduit hydrogen fuel flow of the fuel metering valve and configured to vent a portion of hydrogen fuel upstream of the fuel metering valve; and
a controller configured to control the fuel metering valve and the vent valve, wherein the controller is configured to, during an engine start procedure, open the fuel metering valve and open the vent valve to flow a first fuel portion to the combustor via the fuel metering valve and to vent a second fuel portion via the vent valve.

According to a second aspect there is provided a method of operating a fuel system for an aircraft gas turbine engine, the fuel system comprising:
a main fuel conduit configured to deliver hydrogen fuel to a combustor of the gas turbine engine;
a fuel metering valve configured to modulate a mass flow of fuel delivered to the gas turbine engine combustor;
a vent valve provided upstream in main fuel conduit hydrogen fuel flow of the fuel metering valve and configured to vent a portion of hydrogen fuel upstream of the fuel metering valve; wherein the method comprises:
   during an engine start procedure, controlling the fuel metering valve and the vent valve to open the fuel metering valve and open the vent valve to flow a first fuel portion to the combustor via the fuel metering valve and to vent a second fuel portion via the vent valve.

According to a third aspect there is provided an aircraft propulsion system comprising a gas turbine engine and a fuel system according to the first aspect.

According to a fourth aspect there is provided an aircraft comprising the propulsion system of the third aspect.

The fuel system may comprise a first vent valve and a second vent valve, each vent valve being provided upstream in fuel flow of the fuel metering valve. The first vent valve may comprise a throttle plate configured to provide a metered flow to the first vent valve. The second vent valve may be configured to flow a larger fuel mass flow for given entry conditions compared to the first vent valve.

The fuel system may comprise a third vent valve provided downstream in main hydrogen fuel flow of the fuel metering valve.

The fuel system may comprise a fuel storage unit configured to store hydrogen fuel in a compressed gaseous state or a liquid state.

The fuel system may comprise a fuel pump upstream of the fuel metering valve and fuel vent valve.

The fuel system may comprise a pressure control valve upstream of the fuel metering valve and fuel vent valve, the pressure control valve being configured to control pressure of fuel flow delivered to the fuel vent valve and fuel metering valve.

The method may comprise, in a first engine starting step, opening the vent valve and the fuel metering valve to flow the first fuel portion to the combustor via the fuel metering valve and to vent the second fuel portion via the bypass valve and subsequently, in a second engine starting step, partly close the fuel metering valve to reduce the flow rate of the first fuel portion, then, in a third engine starting step subsequent to the second engine starting step, close the vent valve.

### BRIEF DESCRIPTION OF THE DRAWINGS

An embodiment will now be described by way of example only with reference to the accompanying drawings, in which:
FIG. 1 shows a plan view of an aircraft comprising a hydrogen fuelled propulsion system;
Figure 2 is a block diagram of a fuel system of the propulsion system of figure 1;
Figure 3 is a process flow diagram illustrating a starting process for the propulsion system of figure 1; and
Figure 4 is a graph showing engine fuel flow over time during the starting process of figure 3.

### DETAILED DESCRIPTION

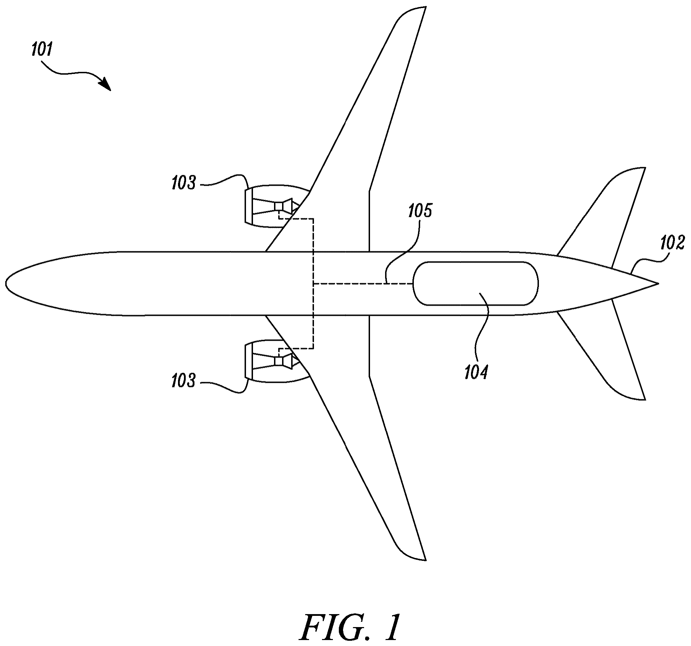

A hydrogen-fuelled airliner is illustrated in Figure 1. In this example, the airliner 101 is of substantially conventional tube-and-wing twinjet configuration with a central fuselage 102 and a propulsion system comprising substantially identical underwing-mounted turbofan engines 103.

A hydrogen storage tank 104 is located in the fuselage 102. The hydrogen storage tank 104 is a cryogenic hydrogen storage tank and thus stores the hydrogen fuel in a liquid state, in a specific example at 22 Kelvin. In this example, the hydrogen fuel is pressurised to a pressure from around 1 bar to around 4 bar, in a specific example 4 bar. As will be appreciated, storing the hydrogen fuel at a higher pressure would necessitate heavier tanks to contain the pressure, and increase the risk of leaks. On the other hand, a lower pressure would reduce the boiling point of the hydrogen, requiring a lower temperature in the tank, and would risk cavitation and or two-phase flow in downstream hydrogen plumbing.

In alternative embodiments, the hydrogen may be stored as a compressed or supercritical fluid at high pressures and low temperatures. For example, the hydrogen may be stored at between 22 and 200 Kelvin, and at pressures between 100 and 300 Bar.

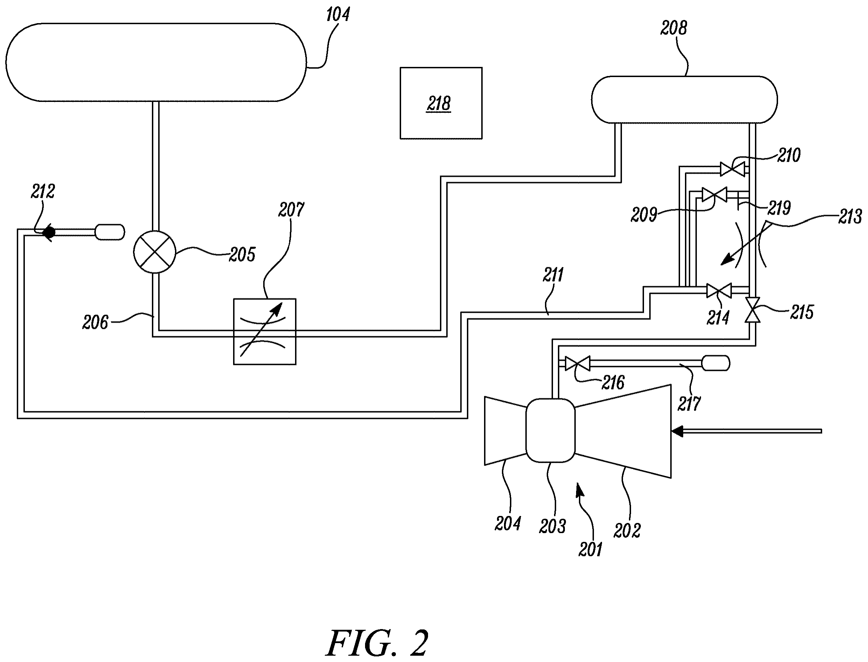

A block diagram of one of the propulsion systems comprising one of the engines 103 and its associated fuel system is shown in Figure 2.

The turbofan engine 103 comprises a core gas turbine 201.

The core gas turbine 201 comprises, in fluid flow series, at least one compressor 202 (and possibly separate low and high-pressure compressors), a core combustor 203 and a turbine system 204 (which typically comprises separate low and high-pressure turbines). The compressor 202 is driven by the turbine 204 via a shaft (not shown), or separate shafts where multiple compressors and turbines are provided. A fan (not shown) is typically provided to provide propulsive thrust in addition to that generated by the engine core. It will be appreciated that in alternative embodiments, the core gas turbine could be of three-shaft configuration, and / or could comprise a reduction gearbox between the turbine and fan.

**In** operation, hydrogen fuel is pumped from the hydrogen storage tank 104 by one or more pumps 205 and into a main fuel conduit 206 which ultimately delivers fuel to the core combustor 206. As will be appreciated, in embodiments where the hydrogen is stored as a gas, the pump 205 may be omitted.

Various valves and controllers are provided to control hydrogen flow through the conduit 206. An optional Pressure Control Valve (PCV) 207 is typically provided downstream of the pump 205 (or downstream of the storage tank 104 where no pump is provided). The PCV 207 is configured to reduce a fuel pressure produced by the pump 205 or received directly from the tank 104. Accordingly, finer, more rapid control of fuel delivery pressure can be provided than using the pump 205 alone.

Optionally, a buffer tank 208 is provided in the main fuel conduit 206 downstream of the PCV 207 in main hydrogen fuel flow. The buffer tank 208 is configured to store gaseous hydrogen provided from the PCV 207, to reduce pressure shocks in the system, and to reduce pressure and massflow variation in use.

Further downstream in hydrogen fuel flow of the PCV 207 and buffer tank 208 is at least one fuel vent valve. **In** this embodiment, first and second fuel vent valves 209, 210 are provided, which are operated differently in use.

The first vent valve 209 is provided downstream in main hydrogen fuel flow of the first vent valve 210 in the present embodiment, though it will be understood that the order could be reversed. The second vent valve 210 is configured to permit a high rate of flow in operation, to provide for rapid venting of contents of the fuel conduit 206 and buffer tank 208 in operation, and consequently typically has a higher flow rate for given fuel conduit 206 gas conditions than the first vent valve 209.

The first vent valve 209 is configured to vent a lower rate of fuel flow under given conditions, and typically comprises a fixed geometry throttle / orifice plate 219 configured to provide a fixed mass flow rate through the valve 209 when opened, when the flow is choked.

Each of the vent valves 209, 210 is fluidly coupled to a vent line 211, which is in turn vented to atmosphere via a check valve 212. Accordingly, flow through the vent valves 209, 210 from the conduit 206 bypasses the combustor 203, and is vented to atmosphere via the vent line 211. As will be understood, in some embodiments, the fuel may be burned in a flare combustor prior to venting to atmosphere, in order to reduce flammability risks or harmful hydrogen emissions.

Further valves are provided downstream of the first and second vent valves 209, 210 in main hydrogen fuel flow. A fuel metering valve (FMV) 213 is provided between the vent valves 209, 210 and combustor 203 in main hydrogen fuel flow. The fuel metering valve comprises a variable geometry aperture and is configured to provide variable fuel mass flow and pressure to the combustor 203 in accordance with engine fuel flow demand. Accordingly, the fuel metering valve 213 is the primary control means for engine thrust control.

A third vent valve 214 is provided downstream of the FMV 213, and is similarly fluidly coupled to the vent line 211.

A fuel shutoff valve (SOV) 215 is provided downstream in main hydrogen fuel conduit flow of the third vent valve 213. The SOV 215 differs from the fuel metering valve 213, in that it is typically a fast acting shutoff valve, having only open and closed positions, rather than being capable of fully variable modulation between open and closed positions.

Finally, a fourth vent valve 216 is provided in main hydrogen fuel flow between the SOV 215 and combustor 203, and is configured to vent via an independent vent line 217. Again, a combustor or flare stack (not shown) may be provided to combust the hydrogen fuel prior to venting to atmosphere.

A controller 218 is provided, which is configured to control the pump 205 and each of the valves 207, 209, 210, 213, 214, 215, 216 in accordance with a control schedule.

During normal engine running, the controller 218 controls the pump 205, PCV 207 and FMV to control fuel flow rate and pressure in accordance with a fuel flow and pressure demand.

As will be understood, fuel flow rate demand varies considerably, as engine thrust demand varies. Additionally, fuel pressure demand varies as aircraft altitude varies, with both a maximum pressure requirement and a maximum fuel flow requirement at sea level maximum take off level thrust demand.

At other points in the aircraft operating cycle, fuel flow demand may be reduced considerably. Accordingly, the FMV must be capable of providing a high "turn-down ratio", i.e. a large difference in fuel mass flow between maximum flow and minimum flow. **In** some cases, this turn-down ratio may be as high as 100:1.

Accurately controlling a valve operating on a compressible gas with such a high turn-down ratio is highly challenging. Such an issue is particularly difficult to control where the low fuel flow demand occurs at low-altitude, i.e. at points in the cycle where the fuel pressure demand is relatively high. Accordingly, the present disclosure provides a solution to this problem.

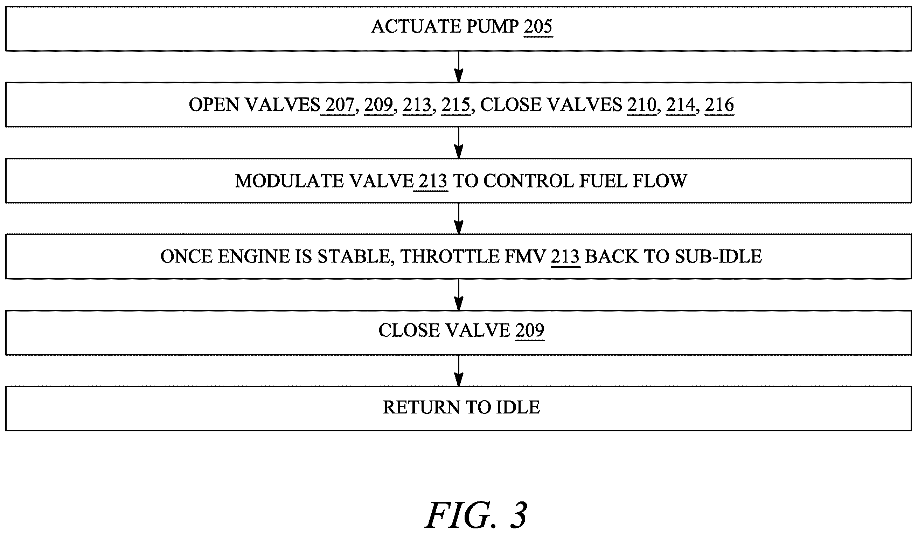

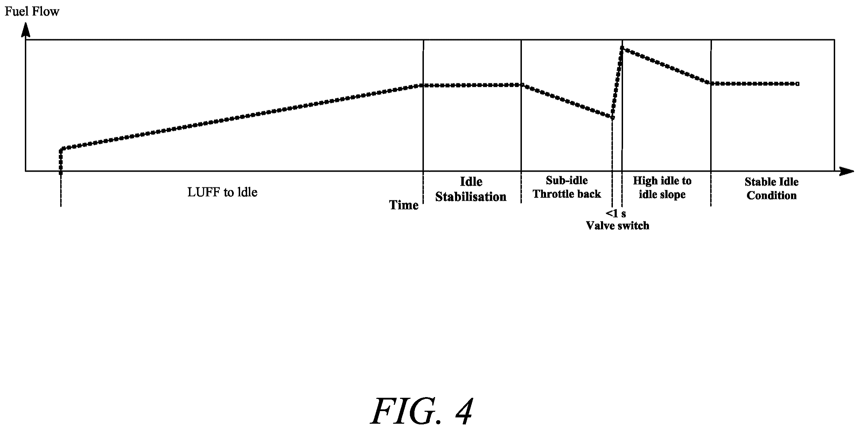

An engine start procedure is defined. Figure 3 illustrates a method flow diagram for the engine start procedure, while figure 4 shows fuel flow over time as the starting procedure is used.

Initially, a pre-start procedure (not shown) may be carried out. For instance, this pre-start procedure may comprise an inerting and purge procedure, in which the first vent valve 209 is opened to purge air from the system with an inerting gas, and then purge the inerting gas through the vent line 211. Further pre-start procedures such as a priming procedure may also be carried out.

Once the system is purged and primed, the starting procedure can then be carried out. In a first step, the pump 205 is actuated to raise the pressure in the fuel conduit 206. In a second step, the first vent valve 209 is closed, and the second vent valve 210 and FMV 213 are opened. The SOV valve 215 is also opened, and the third and fourth vent valves 214, 216 are closed. In order to minimise fuel flow to the combustor 203, the FMV 213 is opened to a partly open condition, typically a minimum flow condition in which the area is as small as practicable while still allowing for consistent flow. The valve 213 may be modulated in a third step to provide fine control over fuel flow, and so increase fuel flow as the engine accelerates to idle. As will be understood, this will cause a first portion of fuel from the conduit 206 to flow to the combustor 206 via the FMV 213, while a second portion is vented through the vent line 211 via the first vent valve 209. As such, the pressure upstream of the FMV 213 is reduced, and accordingly, a fuel flow rate through the FMV 213 and to the combustor 203 is reduced relative to the mass flow rate where the first vent valve 209 is closed. Accordingly, a large range of flow rates can be provided by the system for a given upstream pressure by modulating the FMV 213 and opening or closing the vent valve 209. Consequently, the FMV 213 can be made to have a smaller turndown ratio (and so can be controlled more accurately, and be easier to manufacture), while the fuel system as a whole can still provide the necessary overall turndown ratio. As will be understood, such a system results in some fuel to be vented, and so is wasted. However, the inventors have found only a small quantity of fuel is vented during this process. Typically, less than 1 kg of fuel is required to be vented during this process.

Once the initial startup procedure is complete and the engine is brought to a stable idle, it is desirable to shut off the fuel flow through the first vent valve 209. However, the inventors have found that the rapid shutoff of this flow would result in a sudden increase in fuel flow to the combustor 203, which the FMU valve 213 could not accommodate sufficiently quickly. On the other hand, slowly closing the vent valve 209 may be difficult, and would require a variable position valve. Accordingly, there is a risk of the engine exceeding its maximum rate of acceleration, which could cause control problems such as compressor surge or stall.

Consequently, the starting sequence includes a fourth step, in which, once the engine is at a stabilised idle condition, the FMV 213 is throttled back to a "sub-idle" fuel flow condition. **In** this condition, the engine fuel flow is insufficient to maintain a stable idle condition, but sufficient to enable engine running for a short period.

**In** a fifth step, while the engine is operating in the sub-idle condition, the vent valve 209 is closed, thereby increasing fuel flow once more. The fuel flow is now greater than that required for idle running, and so the FMV 213 is throttled again to reduce fuel flow, until stable conditions are once again achieved.

Accordingly, the disclosed system and method provides a system and procedure for full control of engine fuel flow in a hydrogen gas turbine engine throughout the engine running envelope.

Various examples have been described, each of which comprise one or more combinations of features. It will be appreciated by those skilled in the art that, except where clearly mutually exclusive, any of the features may be employed separately or in combination with any other features and the invention extends to and includes all combinations and sub-combinations of one or more features described herein.

## Claims

1. A fuel system for an aircraft gas turbine engine (103), the fuel system comprising:
a main fuel conduit (206) configured to deliver hydrogen fuel to a combustor (203) of the gas turbine engine (103);
a fuel metering valve (213) configured to modulate a mass flow of fuel delivered to the gas turbine engine combustor (206);
a bypass valve (209, 210) provided upstream in main fuel conduit hydrogen fuel flow of the fuel metering valve (213) and configured to vent a portion of hydrogen fuel upstream of the fuel metering valve (213); and
a controller (218) configured to control the fuel metering valve (213) and the vent valve (209, 210), wherein the controller (218) is configured to, during an engine start procedure, open the fuel metering valve (213) and open the vent valve (209, 210) to flow a first fuel portion to the combustor (206) via the fuel metering valve (213) and to vent a second fuel portion via the vent valve.

2. A fuel system according to claim 1, wherein fuel system may comprise a first vent valve (209) and a second vent valve (210), each vent valve (209, 210) being provided upstream in fuel flow of the fuel metering valve (213).

3. A fuel system according to claim 2, wherein the first vent valve (209) comprises a throttle plate (219) configured to provide a metered flow to the first vent valve (209).

4. A fuel system according to claim 2 or claim 3, wherein the second vent valve (210) is configured to flow a larger fuel mass flow for given entry conditions compared to the first vent valve (209).

5. A fuel system according to any of claims 2 to 4, wherein the fuel system comprises a third vent valve (214) provided downstream in main hydrogen fuel flow of the fuel metering valve (213).

6. A fuel system according to any of the preceding claims, wherein the fuel system comprises a fuel storage unit (104) configured to store hydrogen fuel in a compressed gaseous state or a liquid state.

7. A fuel system according to any of the preceding claims, wherein the fuel system comprises a fuel pump (205) upstream of the fuel metering valve (213) and fuel vent valve (209, 210).

8. A fuel system according to any of the preceding claims, wherein the fuel system comprises a pressure control valve (207) upstream of the fuel metering valve (213) and fuel vent valve (209, 210), the pressure control valve (207) being configured to control pressure of fuel flow delivered to the fuel vent valve (209, 210) and fuel metering valve (213).

9. A method of operating a fuel system for an aircraft gas turbine engine (103), the fuel system comprising:
a main fuel conduit (205) configured to deliver hydrogen fuel to a combustor (206) of the gas turbine engine (103);
a fuel metering valve (213) configured to modulate a mass flow of fuel delivered to the gas turbine engine combustor (206);
a vent valve (209, 210) provided upstream in main fuel conduit hydrogen fuel flow of the fuel metering valve (213) and configured to vent a portion of hydrogen fuel upstream of the fuel metering valve (209, 210); wherein the method comprises:
during an engine start procedure, controlling the fuel metering valve (213) and the vent valve (209, 210) to open the fuel metering valve (213) and open the vent valve (209, 210) to flow a first fuel portion to the combustor (206) via the fuel metering valve (213) and to vent a second fuel portion via the vent valve (209, 210).

10. A method according to claim 9, wherein the method comprises, in a first engine starting step, opening the vent valve (209, 210) and the fuel metering valve to flow the first fuel portion to the combustor (206) via the fuel metering valve (213) and to vent the second fuel portion via the bypass valve (209, 210) and subsequently, in a second engine starting step, partly close the fuel metering valve (213) to reduce the flow rate of the first fuel portion, then, in a third engine starting step subsequent to the second engine starting step, close the vent valve.

11. An aircraft propulsion system comprising the fuel system of any of claims 1 to 8.

12. An aircraft comprising the propulsion system of claim 11.
